# FASCICULE DE BREVET EUROPEEN

(11) **EP 2 621 779 B1**
(45) Date de publication et mention de la délivrance du brevet: **12.07.2017**
(21) Numéro de dépôt: 11771248.9
(22) Date de dépôt: 21.09.2011
(51) Int. Cl.: B60T 8/175, B60T 8/1755, B60T 7/22

(54) **PROCEDE DE FREINAGE AUTOMATIQUE D'UN VEHICULE AUTOMOBILE**
VERFAHREN ZUM AUTOMATISCHEN BREMSEN EINES KRAFTFAHRZEUGS
METHOD FOR THE AUTOMATIC BRAKING OF A MOTOR VEHICLE

(30) Priorité: 28.09.2010 FR 1057806
(43) Date de publication de la demande: 07.08.2013
(73) Titulaire: Peugeot Citroën Automobiles SA, 78140 Vélizy-Villacoublay (FR)
(72) Inventeur: GERONIMI, Stéphane, F-92380 Garches (FR); GURRET, Fabien, F-92100 Boulogne Billancourt (FR)
(86) Numéro de dépôt international: PCT/FR2011/052179
(87) Numéro de publication internationale: WO 2012/042151

(56) Documents cités:
- DE-A1-102008 003 205
- US-A1- 2005 071 071

## Description

La présente invention concerne un procédé de freinage automatique d'un véhicule automobile, un système de freinage automatique du véhicule comportant ce procédé, ainsi qu'un véhicule automobile comprenant un tel procédé de freinage.

Les véhicules automobiles disposent d'une commande de freinage actionnée par le conducteur, qui comporte généralement un circuit hydraulique actionné par une pédale de frein, pour transmettre une pression d'un fluide à des freins de roue et générer un couple de freinage sur chacune des roues du véhicule.

La commande de freinage peut comporter des fonctions automatiques agissant sur les freins des roues, comme un système de contrôle du blocage des roues appelé « ABS », ou un système de contrôle de stabilité de la trajectoire du véhicule appelé « ESC ». Le véhicule comprend alors des capteurs délivrant des renseignements, notamment sur la dynamique du véhicule, à un calculateur qui agit sur chaque frein de roue pour moduler la pression de freinage de cette roue.

On connaît notamment du document DE 102008003205 un système de freinage automatique du véhicule, qui en fonction de différents paramètres mesurés par des capteurs, agit automatiquement sur la commande de freinage des roues pour ralentir le véhicule, et si possible éviter une collision avec un obstacle.

On connaît également du document DE-10317440, des moyens pour détecter un choc sur le véhicule provenant d'une collision avec un obstacle, un tel choc déclenchant ensuite un freinage automatique des roues, ou un maintien de ce freinage si il est déjà activé, afin d'éviter un déplacement incontrôlé du véhicule suite à cette collision, qui pourrait causer un autre accident.

Un problème qui se pose alors, est que le conducteur après une première collision reste libre d'agir sur la pédale d'accélérateur, alors qu'il n'a pas forcément une perception suffisante de l'état du véhicule et de l'environnement après cet accident, pour prendre les meilleures décisions permettant d'éviter un sur-accident.

La présente invention a notamment pour but d'éviter ces inconvénients de la technique antérieure, et de proposer un procédé simple et efficace permettant de limiter les risques d'accidents supplémentaires après une première collision d'un véhicule.

Elle propose à cet effet un procédé de freinage automatique d'un véhicule automobile, conforme à l'objet de la revendication 1. Un avantage du procédé de freinage automatique selon l'invention, est qu'après une collision, si le conducteur appuie sur la pédale d'accélérateur, ce procédé peut combiner un freinage des roues du véhicule avec une inhibition du couple moteur, pour obtenir le meilleur ralentissement du véhicule et l'immobiliser au plus tôt afin d'éviter un autre accident.

Le procédé de freinage automatique selon l'invention peut de plus comporter une ou plusieurs des caractéristiques suivantes, qui peuvent être combinées entre elles.

Avantageusement, le procédé de freinage automatique comporte une fonction d'analyse de situation de vie qui prend en compte la gestion de la dynamique longitudinale du véhicule, pour déclencher un freinage avec une intervention sur la commande du moteur de traction du véhicule.

La gestion de la dynamique longitudinale du véhicule, peut comprendre des mesures de vitesses et d'accélérations de ce véhicule, réalisées suivant différents axes. Selon l'invention le procédé de freinage automatique comporte une fonction d'analyse de situation de vie qui prend en compte une analyse de l'environnement du véhicule, pour déclencher un freinage avec une intervention sur la commande du moteur de traction du véhicule.

L'analyse de l'environnement du véhicule, peut comprendre un suivi de l'obstacle ayant provoqué la collision.

Avantageusement, l'intervention sur la commande du moteur de traction de traction du véhicule, met en oeuvre le calculateur de contrôle de ce moteur.

Le procédé de freinage automatique peut utiliser des algorithmes compris dans un calculateur gérant d'autres systèmes de sécurité, comme un système de contrôle du blocage des roues « ABS », un système de contrôle de stabilité de trajectoire « ESC », ou un système de déclenchement des airbags.

L'invention a aussi pour objet un système de freinage automatique d'un véhicule automobile, qui met en oeuvre un procédé comportant l'une quelconque des caractéristiques précédentes.

L'invention a de plus pour objet un véhicule automobile comprenant un procédé de freinage automatique, comportant l'une quelconque des caractéristiques précédentes.

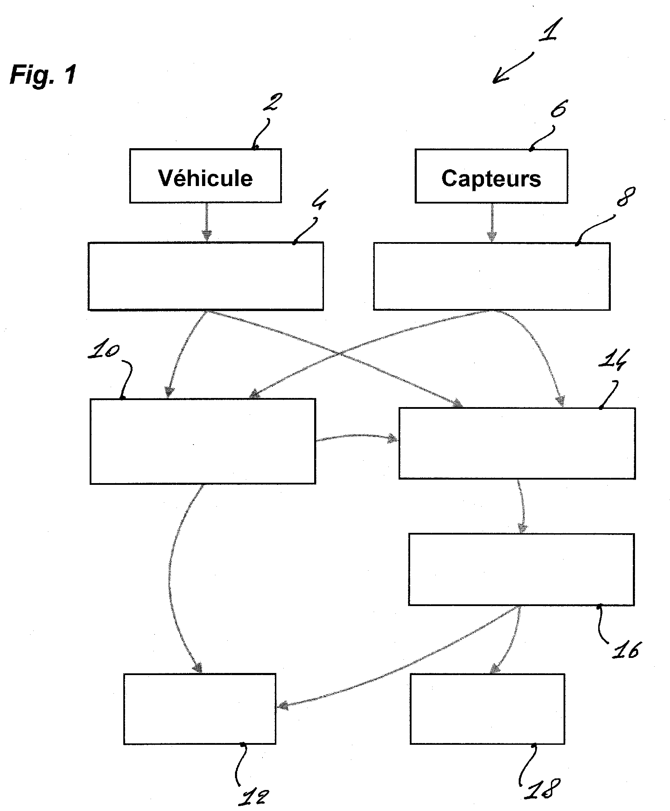

L'invention sera mieux comprise et d'autres caractéristiques et avantages apparaîtront plus clairement à la lecture de la description ci-après donnée à titre d'exemple, en référence à la figure 1 annexée qui est un graphique présentant les principales fonctions d'un système de freinage automatique d'un véhicule selon l'invention.

Le graphique 1 de la figure 1 présente des fonctions d'un système de freinage automatique, mis en oeuvre par un calculateur qui agit sur des freins de roues par un moyen de commande comme une pression hydraulique ou un courant électrique.

Le système de freinage automatique dispose d'abord d'une fonction réalisant une analyse des informations sur l'état du véhicule 4, à partir des caractéristiques propres de l'état du véhicule 2 à un moment donné, qui peuvent provenir de différentes sources comme des informations délivrées par un calculateur de contrôle de fonctions automatisées, ou par des capteurs mesurant des paramètres de fonctionnement du véhicule. Ces informations comportent notamment des vitesses et des accélérations du véhicule, mesurées suivant différents axes.

Le système de freinage automatique dispose ensuite d'une fonction réalisant une analyse de l'environnement du véhicule 8, à partir d'informations sur l'environnement extérieur délivrées par des capteurs 6.

Les résultats associés des deux fonctions analyse des informations véhicule 4 et analyse de l'environnement 8, permettent d'établir une gestion de la dynamique longitudinale du véhicule 10.

La gestion de la dynamique longitudinale 10 intervient si un risque de collision avec un obstacle est possible, par exemple si un obstacle ou une cible est détecté face au véhicule et qu'aucune manoeuvre d'évitement n'est réalisée par le conducteur, pour calculer une décélération longitudinale optimale à appliquer à ce véhicule afin d'éviter la collision.

La décélération longitudinale ainsi calculée par la gestion de la dynamique longitudinale 10, le système déclenche alors une demande de freinage automatique du véhicule délivrée à une fonction de freinage du véhicule 12, qui commande les différents freins des roues de ce véhicule.

Le freinage du véhicule peut selon le niveau de criticité de la situation, être progressif, ou aller jusqu'à un freinage d'urgence avec la puissance maximal si la criticité est importante.

La gestion de la dynamique longitudinale 10 peut mettre en oeuvre d'autres systèmes d'assistance à la conduite liés au freinage, comme le système de contrôle du blocage des roues « ABS », ou le système de contrôle de stabilité de trajectoire « ESC ».

Les résultats associés des deux fonctions analyse des informations véhicule 4 et analyse de l'environnement 8, ainsi que la gestion de la dynamique longitudinale 10 du véhicule, permettent de plus d'établir une analyse de la situation de vie du véhicule 14 après une collision qui n'a pu être évitée, le freinage automatique ayant été déclenché ou pas.

L'analyse de situation de vie du véhicule 14 prend en compte une première famille de paramètres provenant de l'analyse des informations véhicule 4, comportant notamment des vitesses et accélérations du véhicule mesurées suivant différents axes, des informations délivrées par le système de contrôle de stabilité de trajectoire « ESC », ou d'autres valeurs comme la vitesse de rotation du moteur thermique.

L'analyse de situation de vie du véhicule 14 prend aussi en compte une deuxième famille de paramètres provenant de l'analyse de l'environnement 8 à partir de différents capteurs, radar ou caméra, qui décrivent l'environnement du véhicule comme les obstacles potentiels, la largeur de la route, ou la position des infrastructures. Elle prend enfin en compte une troisième famille de paramètres qui analyse les conditions ayant déclenchées le freinage automatique, comprenant notamment la cinématique de l'obstacle et son positionnement par rapport au véhicule, ou la durée du suivi de cet obstacle.

La fonction d'analyse de situation de vie 14 permet en particulier de détecter un actionnement du freinage automatique, et de confirmer une collision qui a été prévue par le suivi d'un obstacle dangereux ayant déclenché ce freinage automatique. La détection de cette collision peut se faire notamment à partir des informations délivrées par des accéléromètres enregistrant une accélération brutale, ou par le déploiement des airbags de sécurité des passagers.

La fonction d'analyse de situation de vie 14 continue après la collision à recevoir des informations, en particulier sur la dynamique du véhicule, notamment pour vérifier si le véhicule roule encore, et la cohérence de sa trajectoire par rapport à sa dynamique, ainsi que sur l'environnement de ce véhicule, notamment sur l'évolution des obstacles et sur les nouvelles positions de ce véhicule.

Les informations délivrées par la fonction d'analyse de situation de vie 14 sont transmises à une fonction de gestion de la sécurité du véhicule 16, qui reçoit de plus des informations sur les actions du conducteur, pour déterminer la meilleure intervention possible sur la dynamique du véhicule afin d'assurer la sécurité, et notamment éviter une autre collision.

La gestion de sécurité du véhicule 16 peut déclencher alors une demande de freinage automatique du véhicule, ou une poursuite de ce freinage automatique s'il a déjà été déclenché, qui est délivrée à la fonction de freinage du véhicule 12 commandant les freins des roues.

Le freinage automatique peut être modulé ou maximal suivant les nécessités, il peut mettre en oeuvre différents moyens de freinage comme le frein principal du véhicule ou le frein de stationnement.

La gestion de sécurité du véhicule 16 peut de plus inhiber la commande de l'accélérateur 18 en effectuant cette demande à un moyen de contrôle du moteur thermique de traction du véhicule, dans le cas où un couple moteur devrait être délivré suite à une action du conducteur sur la pédale de gaz, ou suite à d'autres causes comme des défaillances provoquées par l'accident.

L'inhibition de la commande d'accélérateur 18 peut être réalisée de manière simple et économique, en utilisant des moyens existants sur le véhicule pour y ajouter de nouvelles fonctions. Avantageusement, la demande d'inhibition de la commande d'accélérateur 18, passe par le calculateur de contrôle du moteur.

L'analyse de situation de vie 14 et la gestion de sécurité du véhicule 16, sont des fonctions mettant en oeuvre des algorithmes qui peuvent être implantés dans un calculateur dédié, ou dans un calculateur existant comme celui du système de contrôle du blocage des roues « ABS », du système de contrôle de stabilité de trajectoire « ESC », ou du système de déclenchement des airbags. Ces fonctions peuvent utiliser des capteurs existants, notamment des capteurs délivrant des informations sur l'environnement du véhicule comme des radars de système « ACC » de suivi de distance pour adapter la vitesse de ce véhicule, ou des caméras utilisées pour la navigation.

Avantageusement, le système de freinage automatique utilise les moyens existants de systèmes agissant sur les freins de roue, comme l'anti-blocage des roues « ABS » ou le contrôle de stabilité de trajectoire « ESC », comprenant des pompes et des vannes permettant de contrôler ces freins.

## Revendications

1. - Procédé de freinage automatique d'un véhicule automobile, mettant en oeuvre une fonction de gestion de la dynamique longitudinale du véhicule (10), un freinage du véhicule (12) utilisant des freins des roues, consistant, après la détection d'une première collision de ce véhicule avec un obstacle, à intervenir de plus sur la commande du moteur de traction du véhicule (18) pour après la première collision, ne pas délivrer de couple moteur sur les roues motrices de ce véhicule quelle que soit la demande du conducteur à partir d'une fonction d'analyse de situation de vie (14) qui prend en compte une analyse de l'environnement du véhicule (8) comprenant un suivi de l'obstacle ayant provoqué la première collision pour déclencher un freinage (12) avec une intervention sur la commande du moteur de traction du véhicule (18); **caractérisé en ce que** la première collision est détectée à partir des informations délivrées par les accéléromètres enregistrant une accélération brutale, ou par le déploiement des airbags de sécurité des passagers, les informations délivrées par la fonction d'analyse de situation de vie (14) étant en outre transmises à une fonction de gestion de la sécurité du véhicule (16), qui reçoit de plus des informations sur les actions du conducteur, pour déterminer la meilleure intervention possible sur la dynamique du véhicule afin d'assurer la sécurité, et éviter une autre collision .

2. - Procédé de freinage automatique suivant la revendication 1, **caractérisé en ce qu'**il comporte une fonction d'analyse de situation de vie (14) qui prend en compte la gestion de la dynamique longitudinale du véhicule (10), pour déclencher un freinage (12) avec une intervention sur la commande du moteur de traction du véhicule (18).

3. - Procédé de freinage automatique suivant la revendication 2, **caractérisé en ce que** la gestion de la dynamique longitudinale du véhicule (10), comprend des mesures de vitesses et d'accélérations de ce véhicule, réalisées suivant différents axes.

4. - Procédé de freinage automatique suivant l'une quelconque des revendications précédentes, **caractérisé en ce que** l'intervention sur la commande du moteur de traction du véhicule (18) met en oeuvre le calculateur de contrôle de ce moteur.

5. - Procédé de freinage automatique suivant l'une quelconque des revendications précédentes, **caractérisé en ce qu'**il utilise des algorithmes compris dans un calculateur gérant d'autres systèmes de sécurité, comme un système de contrôle du blocage des roues « ABS », un système de contrôle de stabilité de trajectoire « ESC », ou un système de déclenchement des airbags.

6. - Système de freinage automatique d'un véhicule automobile, **caractérisé en ce qu'**il met en oeuvre un procédé réalisé suivant l'une quelconque des revendications précédentes.

7. - Véhicule automobile comprenant un système de freinage automatique suivant la revendication 6.

## Patentansprüche

1. Verfahren zur automatischen Bremsung eines Kraftfahrzeugs, das eine Funktion zur Verwaltung der Längsdynamik des Fahrzeugs (10) einsetzt, wobei eine Bremsung des Fahrzeugs (12) Bremsen der Räder verwendet, darauf beruhend, nach Erfassung einer ersten Kollision dieses Fahrzeugs mit einem Hindernis, darüber hinaus in die Steuerung des Fahrmotors des Fahrzeugs (18) einzugreifen, um nach der ersten Kollision unabhängig von der Anforderung des Lenkers ausgehend von einer Funktion zur Analyse der Lebenssituation (14) kein Motordrehmoment auf die Antriebsräder dieses Fahrzeugs zu übertragen, die eine Analyse der Umgebung des Fahrzeugs (8) berücksichtigt, eine Überwachung des Hindernisses umfassend, das die erste Kollision ausgelöst hat, um eine Bremsung (12) mit einem Eingriff in die Steuerung des Fahrmotors des Fahrzeugs (18) auszulösen; **dadurch gekennzeichnet, dass** die erste Kollision ausgehend von Informationen erfasst wird, die durch die Beschleunigungsmesser geliefert werden, die eine plötzliche Beschleunigung aufzeichnen, oder durch die Entfaltung der Sicherheitsairbags der Passagiere, wobei die Informationen, die durch die Funktion zur Analyse der Lebenssituation (14) geliefert werden, darüber hinaus zu einer Funktion zur Verwaltung der Sicherheit des Fahrzeugs (16) übertragen werden, die darüber hinaus Informationen über die Aktionen des Lenkers empfängt, um den bestmöglichen Eingriff auf die Dynamik des Fahrzeugs zu bestimmen, um die Sicherheit zu gewährleisten und eine weitere Kollision zu vermeiden.

2. Verfahren zur automatischen Bremsung nach Anspruch 1, **dadurch gekennzeichnet, dass** es eine Funktion zur Analyse der Lebenssituation (14) umfasst, die die Verwaltung der Längsdynamik des Fahrzeugs (10) berücksichtigt, um eine Bremsung (12) mit einem Eingriff in die Steuerung des Fahrmotors des Fahrzeugs (18) auszulösen.

3. Verfahren zur automatischen Bremsung nach Anspruch 2, **dadurch gekennzeichnet, dass** die Verwaltung der Längsdynamik des Fahrzeugs (10) Messungen von Geschwindigkeiten und Beschleunigungen dieses Fahrzeugs umfasst, die entsprechend verschiedener Achsen durchgeführt werden.

4. Verfahren zur automatischen Bremsung nach irgendeinem der vorhergehenden Ansprüche, **dadurch gekennzeichnet, dass** Eingriff in die Steuerung des Fahrmotors des Fahrzeugs (18) den Kontrollrechner dieses Motors einsetzt.

5. Verfahren zur automatischen Bremsung nach irgendeinem der vorhergehenden Ansprüche, **dadurch gekennzeichnet, dass** es Algorithmen verwendet, die in einem Rechner enthalten sind, der andere Sicherheitssysteme verwaltet, wie ein System zur Kontrolle der Blockierung der Räder "ABS", ein System zur Kontrolle der Spurführungsstabilität "ESC" oder ein System zur Auslösung der Airbags.

6. System zur automatischen Bremsung eines Kraftfahrzeugs, **dadurch gekennzeichnet, dass** es ein Verfahren einsetzt, das nach irgendeinem der vorhergehenden Ansprüche realisiert wird.

7. Kraftfahrzeug, das ein System zur automatischen Bremsung nach Anspruch 6 umfasst.

## Claims

1. Motor vehicle automatic braking process, implementing a function of management of the vehicle's longitudinal dynamics (10), braking of the vehicle (12) using wheel brakes, consisting, after the detection of a first collision of this vehicle with an obstacle, of operating on the control of the vehicle's motor (18) so that after the first collision it is unable to deliver motor torque to the drive wheels of this vehicle no matter what the driver does based on an analysis function of life situation (14) which takes account of an analysis of the vehicle environment (8) including monitoring the obstacle having caused the first collision which started a braking (12) with intervention on the control of the vehicle's motor (18); **characterised in that** this first collision is detected from information delivered by the accelerometers registering sudden acceleration, or by the deployment of the passenger safety airbags, the information delivered by the analysis function of life situation (14) being in addition transmitted to a vehicle safety management function (16), which receives in addition information concerning the driver's actions, in order to determine the best possible action to be taken on the vehicle's dynamics to assure safety, and avoid another collision.

2. Automatic braking process according to claim 1, **characterised in that** it includes a analysis function of life situation (14) which takes account of the management of the vehicle's longitudinal dynamics (10), to activate a braking (12) with intervention on the control of the vehicle's motor (18).

3. Automatic braking process according to claim 2, **characterised in that** the management of the vehicle's longitudinal dynamics (10) includes measurement of the speed and acceleration of this vehicle, carried out on the different axes.

4. Automatic braking process according to any one of the preceding claims, **characterised in that** the intervention on the control of the vehicle's motor (18) involves the motor's control processor.

5. Automatic braking process according to any one of the preceding claims, **characterised in that** it uses the algorithms comprised in the processor managing other safety systems, such as a system of control for blocking the wheels "ABS", a trajectory control system "ESC", or a system for triggering the airbags.

6. Automatic braking system for a motor vehicle, **characterised in that** it implements a process according to one of the preceding claims.

7. Motor vehicle including an automatic braking system according to claim 6.
